(19) Europäisches Patentamt
European Patent Office
Office européen des brevets

(11) EP 3 098 743 A1

# (12) EUROPEAN PATENT APPLICATION

(43) Date of publication:
**30.11.2016 Bulletin 2016/48**

(51) Int Cl.:
***G06F 21/14*** *(2013.01)* ***G06F 21/50*** *(2013.01)*

(21) Application number: **16165630.1**

(22) Date of filing: **15.04.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.05.2015 US 201514704083**

(71) Applicant: **NXP B.V.**
**5656 AG Eindhoven (NL)**

(72) Inventors:
- **HOOGERBRUGGE, Jan**
  **5656 AG Eindhoven (NL)**
- **MICHIELS, Wilhelmus P.A.J**
  **5656 AG Eindhoven (NL)**

(74) Representative: **Krott, Michel**
**NXP Semiconductors**
**Intellectual Property & Licensing**
**High Tech Campus 60**
**5656 AG Eindhoven (NL)**

## (54) OBSCURING SOFTWARE CODE WITH SPLIT VARIABLES

(57) A method of obscuring software code including a plurality of operations, including: identifying, by a processor, an operation to be obscured; determining an equivalent split variable expression for the operation to be obscured using split variables; and replacing the operation to be obscured with the determined equivalent split variable expression.

100
START
105
RECEIVING HIGH LEVEL LANGUAGE SOURCE CODE
110
IDENTIFYING OPERATIONS TO BE OBSCURED
115
DETERMINING THE EQUIVALENT SPLIT VARIABLE EXPRESSION FOR THE OPERATION USING SPLIT VARIABLES
120
REPLACING THE IDENTIFIED OPERATION WITH THE EQUIVALENT SPLIT VARIABLE OPERATION
125
STOP
130

**FIG. 1**

EP 3 098 743 A1

## Description

## TECHNICAL FIELD

Various exemplary embodiments disclosed herein relate generally to hiding data values being processed and preventing an attacker from recovering the plain data values being processed.

## BACKGROUND

Today software applications are widely used to provide various services to users. These software applications may be hosted on a variety of different devices, such as for example, mobile phones, personal computers, laptop computers, tablets, set top boxes, *etc.* Software applications are found in many systems in use by consumers or in industrial systems. Software applications are also found in smart cards and credit cards. Further, software applications may be implemented across networks such as the internet, where the software application runs on servers, and is accessed using various user devices. Many of these software applications require the use of security protocols to protect content, information, transactions, and privacy. Many software applications are run in environments where an attacker has complete control of the operation of the software application, and an attacker may attempt to reverse engineer the code of the software application in order to gain access to secure information or to even understand the operation of the software in order to reproduce or modify the functionality of the software application. An attacker may use various reverse engineering tools, such as for example, code analyzers and debuggers, to obtain information related to the software application. Accordingly, techniques have been developed to in order to make it hard for an attacker to reverse engineer software. One way to make reverse engineering of the code more difficult is code obfuscation. Code obfuscation seeks to create obfuscated code that is difficult for humans to understand. Code obfuscation may be used to conceal a software application's purpose or its logic, so as to prevent tampering or reverse engineering of the software application.

## SUMMARY

A brief summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various exemplary embodiments relate to a method of obscuring software code including a plurality of operations, including: identifying, by a processor, an operation to be obscured; determining an equivalent split variable expression for the operation to be obscured using split variables; and replacing the operation to be obscured with the determined equivalent split variable expression.

Various embodiments relate to a non-transitory machine-readable storage medium encoded with instructions for execution by a processor for obscuring software code including a plurality of operations, including instructions for carrying out a method of the kind set forth.

Various embodiments are described further including a processing system for obscuring software code including a plurality of operations, including a processor being configured to: identify an operation to be obscured; determine an equivalent split variable expression for the operation to be obscured using split variables; and replace the operation to be obscured with the determined equivalent split variable expression.

Various embodiments are described wherein the split variables are split into two portions.

Various embodiments are described wherein the split variables are determined using first and second secret multiplicative values and a modulus value.

Various embodiments are described wherein the split variables are further determined using a secret additive value.

Various embodiments are described wherein the equivalent split variable expression is arranged so that none of the first and second secret multiplicative values and the secret additive value are not observable to an attacker.

Various embodiments are described wherein the split variable x may be split as follows: $x = X_\alpha X_1 + X_\beta X_1 + X_\gamma$ *mod* m where $X_\alpha$, $X_\beta$, and $X_\gamma$ are secret values and m is a modulus value.

Various embodiments are described wherein the split variables are split into N portions using secret values, wherein N > 2.

Various embodiments are described wherein the processor is further configured to: convert a split output of the determined equivalent split variable expression to a single output corresponding to the output of the operation to be obscured.

Various embodiments are described wherein the method of obscuring software code is carried out by a compiler.

Various embodiments are described wherein the processing system implements a compiler.

## BRIEF DESCRIPTION OF THE DRAWINGS

In order to better understand various exemplary embodiments, reference is made to the accompanying drawings, wherein:

FIG. 1 illustrates a method of obscuring software code using split variable expressions; and
FIG. 2 illustrates a system for providing a user device secure content and a software application that processes the secure content.

To facilitate understanding, identical reference numerals have been used to designate elements having substantially the same or similar structure and/or substantially the same or similar function.

## DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art, and are to be construed as being without limitation to such specifically recited examples and conditions. Additionally, the term, "or," as used herein, refers to a non-exclusive or (*i.e.,* and/or), unless otherwise indicated (*e.g.,* "or else" or "or in the alternative"). Also, the various embodiments described herein are not necessarily mutually exclusive, as some embodiments can be combined with one or more other embodiments to form new embodiments.

In many situations software applications have to be protected against attackers that attempt to reverse engineer the code, such as in the examples mentioned above. Attackers may use sophisticated tools to analyze software in binary form to understand what the software is doing and how the software works.

In many software applications, one wants to hide the values being processed from an attacker by encoding the values so that it is very difficult for the attacker to recover the plain values from the encoded values. The challenge is to perform computations on these encoded values without first decoding them to the plain values, performing the computation, and then encoding the result. In this situation the plain values would become visible to the attacker.

U.S. Patent No. 7,966,499 to Kandanchatha provides a solution to this problem using modular arithmetic. This technique has the property that there is a bijection between plain and encoded values meaning that every plain value maps to one encoded value. This presents a problem in that it makes attacking such encoding possible.

Below embodiments are described such that there is no longer a bijection meaning that a plain value may have multiple encoded representations. This will make it much more difficult for an attacker to understand the program execution. Of course, every encoded value still maps to one plain value, otherwise the interpretation of the data would no longer be unambiguous.

Kandanchatha describes how to encode integer data and how to do arithmetic on it. Every variable and every intermediate value of a computation has two associated secret values referred to as $\alpha$ and $\beta$. These values may be randomly chosen by a protection tool that implements the data protection and may be seen as secret keys. A plain value x is mapped to encoded value X by $X = X_\alpha x + X_\beta$. An addition z = x+y may be implemented as follows:

$$Z = Z_\alpha\left(\frac{X-X_\beta}{X_\alpha} + \frac{Y-Y_\beta}{Y_\alpha}\right) + Z_\beta$$

In this expression one sees that x and y are decoded, the addition takes place, and then that the result is encoded again. Doing the computation like this is of course not secure. It becomes secure when the computation is restructured as follows:

$$Z = Z_\alpha X_\alpha^{-1} X + Z_\alpha Y_\alpha^{-1} Y + \left(-Z_\alpha X_\alpha^{-1} X_\beta + Z_\alpha Y_\alpha^{-1} Y_\beta + Z_\beta\right)$$

This expression now will be compiled such that constants in front of X and Y and the term inside brackets is evaluated at compile time into single constants. As a result the secret $\alpha$ and $\beta$ values are never be visible in the binary application code that becomes available to the attacker.

In order to ensure that the inverse of $X_\alpha$ and $Y_\alpha$ exist, Kandanchatha uses modular arithmetic in $\mathbb{Z}_m$, where

the m and $\alpha$ values are coprime. An efficient implementation on an N-bit processor is to use a modulus of $2^N$ so that the modulus computation is implicitly executed by overflowing arithmetic where arithmetic wraps around. In this case, the addition on the encoded data may be performed with two multiplies and two additions.

Due to modular arithmetic, if large random values for the $\alpha$ and $\beta$ values are used, the encoded value will be quite different from the plain value and will behave quite differently. Other operations, such as subtraction and multiplication, can be done in a similar fashion as illustrated in Kandanchatha.

In the embodiments described below, a value x is not mapped to a single value X (as in Kandanchatha) but instead to two values $X_1$ and $X_2$ such that x may be represented by multiple combinations of $X_1$ and $X_2$. The property that a single plain value has multiple representations will increase the difficulty in understanding the execution of the program by an attacker.

The following relation between a plain value x and its encoded representation $X_1$. and $X_2$ is used:

$$x = X_\alpha X_1 + X_\beta X_1 + X_\gamma$$

where $X_\alpha$, $X_\beta$, and $X_\gamma$ are secret values. For an addition z = *x* + *y*, the following encoding would be applied:

$$Z_\alpha Z_1 + Z_\beta Z_2 + Z_\gamma = X_\alpha X_1 + X_\beta X_2 + X_\gamma + Y_\alpha Y_1 + Y_\beta Y_2 + Y_\gamma$$

This equality may be split into two equalities as follows (other ways to split are possible as well):

$$Z_\alpha Z_1 + Z_\gamma = X_\alpha X_1 + Y_\beta Y_2 + Y_\gamma$$

$$Z_\beta Z_2 = Y_\alpha Y_1 + X_\beta X_2 + X_\gamma$$

Isolating for $Z_1$ and $Z_2$ gives:

$$Z_1 = Z_\alpha^{-1}(X_\alpha X_1 + Y_\beta Y_2 + Y_\gamma - Z_\gamma)$$

$$Z_2 = Z_\beta^{-1}(Y_\alpha Y_1 + X_\beta X_2 + X_\gamma)$$

Or:

$$Z_1 = Z_\alpha^{-1} X_\alpha X_1 + Z_\alpha^{-1} Y_\beta Y_2 + Z_\alpha^{-1} Y_\gamma - Z_\alpha^{-1} Z_\gamma$$

$$Z_2 = Z_\beta^{-1} Y_\alpha Y_1 + Z_\beta^{-1} X_\beta X_2 + Z_\beta^{-1} X_\gamma$$

Again, the code may be compiled so that the individual $\alpha$, $\beta$, and $\gamma$ values are not present in the resulting code. Furthermore, modular arithmetic is needed and the modulus needs to be co-prime with $\alpha$, $\beta$, and $\gamma$ values.

The split values $Z_1$ and $Z_2$ may then be input to other operations based upon these values. Some or all of the various mathematical operations in a program may be carried out using the split variables. Once the actual values are need to be passed to another system, the values may be decoded.

In a similar manner a multiplication operation Z = $X \cdot Y$ may be computed as follows:

$$Z_\alpha Z_1 + Z_\beta Z_2 + Z_\gamma = \left(X_\alpha X_1 + X_\beta X_2 + X_\gamma\right)\left(Y_\alpha Y_1 + Y_\beta Y_2 + Y_\gamma\right).$$

After splitting (other splits are possible as well) and isolating for $Z_1$ and $Z_2$ gives:

$$Z_1 = \left(Z_\alpha^{-1}X_\alpha Y_\alpha Y_1 + Z_\alpha^{-1}X_\alpha Y_\beta Y_2 + Z_\alpha^{-1}X_\alpha Y_\gamma\right)X_1 + Z_\alpha^{-1}X_\gamma Y_\alpha + Z_\alpha^{-1}Z_\gamma$$

$$Z_2 = \left(Z_\beta^{-1}X_\beta Y_\alpha Y_1 + Z_\beta^{-1}X_\beta Y_\beta Y_2 + Z_\beta^{-1}X_\beta Y_\gamma\right)X_2 + Z_\beta^{-1}X_\gamma Y_\alpha Y_1 + Z_\beta^{-1}X_\gamma Y_\beta Y_2$$

Again, the code may be compiled so that the individual $\alpha$, $\beta$, and $\gamma$ values are not present in the resulting code.

It is noted that the variables may be split into more than two portions, for example, x may be split into N portions $X_1, X_2, \ldots, X_N$. The encoding of x may use N+1 secret values to encode the N portions $X_1, X_2, \ldots, X_N$ similar to what is described above. Further, the various calculations described above, as well as others, may be expanded to use N split portions as well.

Other operations may be implemented similarly. The cost for the increased difficulty for the attacker is doubling the size of the encoded representation and roughly doubling the increase in computational effort. In return, the property that a single plain value has multiple representations will increase the difficulty of an attacker trying to understand the execution of the program.

The embodiments described herein may be implemented in a complier that compiles a higher order language into machine code for execution on a processor. Also, the embodiments may be applied to existing machine code to obscure the operation of that machine code.

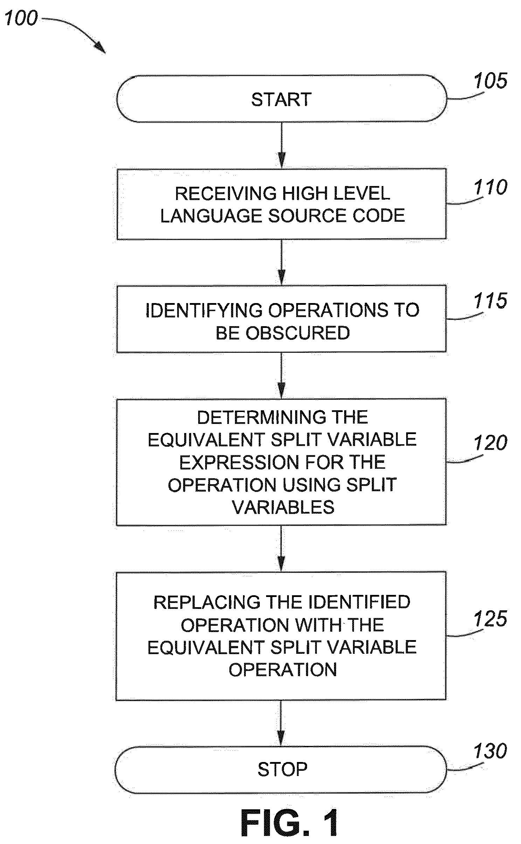

FIG. 1 illustrates a method of obscuring software code using split variable expressions. The method 100 may begin at 105. Next, the method may receive high level language source code 110. Then the method 100 may identify the operations in the high level code to be obscured 115. Next, the method 100 may determine the equivalent split variable expression for the operation using split variables 120. Then the method 100 may replace the identified operation with the equivalent split variable operation 125. The method 100 then ends at 130.

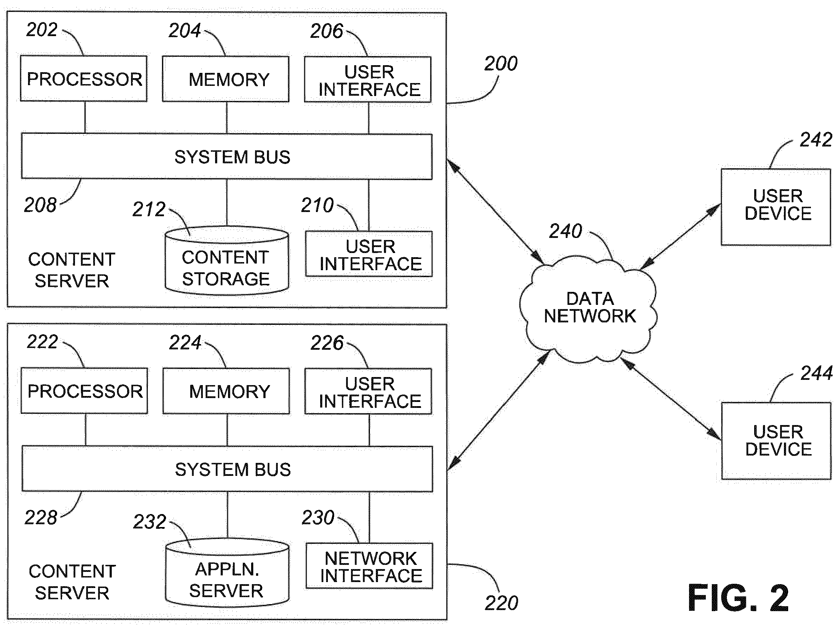

FIG. 2 illustrates a system for providing a user device secure content and a software application that processes the secure content. For example, the software application may be obscured as described above. The system includes a content server 200, application server 220, user devices 250, 252, and a data network 240. The user devices 250, 252 may request access to secure content provided by the content server 200 via data network 240. The data network can be any data network providing connectivity between the user devices 250, 252 and the content server 200 and application server 220. The user devices 250, 252 may be one of a plurality of devices, for example, set top boxes, media streamers, digital video recorders, tablets, mobile phones, laptop computers, portable media devices, smart watches, desktop computers, media servers, *etc.*

The user request for access may first require the downloading of a software application that may be used to process the secure content provided by the content server 200. The software application may be downloaded from the application server 220. The software application may be obscured using the techniques described above as well as operate as described above. Once the user devices 250, 252 install the software application, the user device may then download secure content from the content server 200 and access the secure content using the downloaded software application. For example, the downloaded software application may perform decryption of encrypted content received from the content server. In other embodiments, the software application may perform other secure operations, such as for example, encryption, digital signature generation and verification, *etc.*

The content server 200 may control the access to the secure content provided to the user devices 250, 252. As a result when the content server 200 receives a request for secure content, the content server 200 may transmit the secure content to the requesting user device. Likewise, the application server 220 may control access to the software application provided to the user devices 250, 252. As a result when the content server 220 receives a request for the software application, the application server 220 may transmit the software application to the requesting user device. A user device requesting the software application or secure content may also be authenticated by the respective servers, before providing the software application or secure content to the user device.

The content server 200 may include a processor 202, memory 204, user interface 206, network interface 210, and content storage 212 interconnected via one or more system buses 208. It will be understood that FIG. 2 constitutes, in some respects, an abstraction and that the actual organization of the components of the device 200 may be more complex than illustrated.

The processor 202 may be any hardware device capable of executing instructions stored in memory 204 or storage 212. As such, the processor may include a microprocessor, field programmable gate array (FPGA), application-specific integrated circuit (ASIC), or other similar devices.

The memory 204 may include various memories such as, for example L1, L2, or L3 cache or system memory. As such, the memory 202 may include static random access memory (SRAM), dynamic RAM (DRAM), flash memory, read only memory (ROM), or other similar memory devices.

The user interface 206 may include one or more devices for enabling communication with a user such as an administrator. For example, the user interface 206 may include a display, a mouse, and a keyboard for receiving user commands.

The network interface 210 may include one or more devices for enabling communication with other hardware devices. For example, the network interface 210 may include a network interface card (NIC) configured to communicate according to the Ethernet protocol. Additionally, the network interface 210 may implement a TCP/IP stack for communication according to the TCP/IP protocols. Various alternative or additional hardware or configurations for the network interface 210 will be apparent.

The content storage 212 may include one or more machine-readable content storage media such as read-only memory (ROM), random-access memory (RAM), magnetic disk storage media, optical storage media, flash-memory devices, or similar storage media. In various embodiments, the content storage 212 may store content to be provided to users.

The application server 220 includes elements like those in the content server 200 and the description of the like elements in the content server 200 apply to the application server 220. Also, the content storage 212 is replaced by application storage 232. Further, it is noted that the content server and applications server may be implemented on a single server. Also, such servers may be implemented on distributed computer systems as well as on cloud computer systems.

A method according to the embodiments of the invention may be implemented on a computer system as a computer implemented method. Executable code for a method according to the invention may be stored on a computer program medium. Examples of computer program media include memory devices, optical storage devices, integrated circuits, servers, online software, *etc.* Such a computer system, may also include other hardware elements including storage, network interface for transmission of data with external systems as well as among elements of the computer system.

In an embodiment of the invention, the computer program may include computer program code adapted to perform all the steps of a method according to the invention when the computer program is run on a computer. Preferably, the computer program is embodied on a non-transitory computer readable medium.

A method of creating the obscured code of a white-box implementation according to the invention may be implemented on a computer as a computer implemented method. Executable code for a method according to the embodiments may be stored on a computer program medium. In such a method, the computer program may include computer program code adapted to perform all the steps of the method when the computer program is run on a computer. The computer program is embodied on a non-transitory computer readable medium.

Any combination of specific software running on a processor to implement the embodiments of the invention, constitute a specific dedicated machine.

As used herein, the term "non-transitory machine-readable storage medium" will be understood to exclude a transitory propagation signal but to include all forms of volatile and non-volatile memory. Further, as used herein, the term "processor" will be understood to encompass a variety of devices such as microprocessors, field-programmable gate arrays (FPGAs), application-specific integrated circuits (ASICs), and other similar processing devices. When software is implemented on the processor, the combination becomes a single specific machine.

It is noted that the embodiments above have been described with reference to different subject-matters. In particular, some embodiments may have been described with reference to method-type claims whereas other embodiments may have been described with reference to system-type claims. However, a person skilled in the art will gather from the above that, unless otherwise indicated, in addition to any combination of features belonging to one type of subject-matter also any combination of features relating to different subject-matters, in particular a combination of features of the method-type claims and features of the system-type claims, is considered to be disclosed with this document.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be effected while remaining within the spirit and scope of the invention. Accordingly, the foregoing disclosure, description, and figures are for illustrative purposes only and do not in any way limit the invention, which is defined only by the claims.

## Claims

**1.** A method of obscuring software code including a plurality of operations, comprising:

identifying, by a processor, an operation to be obscured;
determining an equivalent split variable expression for the operation to be obscured using split variables; and
replacing the operation to be obscured with the determined equivalent split variable expression.

**2.** The method of claim 1, wherein the split variables are split into two portions.

**3.** The method of claim 2, wherein the split variables are determined using first and second secret multiplicative values and a modulus value.

**4.** The method of claim 3, wherein the split variables are further determined using a secret additive value.

**5.** The method of claim 4, wherein the equivalent split variable expression is arranged so that none of the first and second secret multiplicative values and the secret additive value are not observable to an attacker.

**6.** The method of any one of claims 2 to 5, wherein the split variable x may be split as follows:

$$x = X_{\alpha}X_1 + X_{\beta}X_1 + X_{\gamma} \bmod m$$

where $X_{\alpha}$, $X_{\beta}$, and $X_{\gamma}$ are secret values and m is a modulus value.

**7.** The method of any preceding claim, wherein the split variables are split into N portions using secret values, wherein N > 2.

**8.** The method of any preceding claim, further comprising:

converting a split output of the determined equivalent split variable expression to a single output corresponding to the output of the operation to be obscured.

**9.** The method of any preceding claim, wherein the method of obscuring software code is carried out by a compiler.

**10.** A non-transitory machine-readable storage medium encoded with instructions for execution by a processor for obscuring software code including a plurality of operations, comprising instructions for carrying out the method of any preceding claim.

**11.** A processing system for obscuring software code including a plurality of operations, comprising a processor being configured to:

identify an operation to be obscured;
determine an equivalent split variable expression for the operation to be obscured using split variables; and
replace the operation to be obscured with the determined equivalent split variable expression.

**12.** The processing system of claim 11, wherein the split variables are split into two portions.

**13.** The processing system of claim 12, wherein the split variables are determined using first and second secret multiplicative values and a modulus value.

**14.** The processing system of claim 13, wherein the split variables are further determined using a secret additive value.

**15.** The processing system of claim 14, wherein the equivalent split variable expression is arranged so that none of the first and second secret multiplicative values and the secret additive value are not observable to an attacker.

100
START
105
RECEIVING HIGH LEVEL LANGUAGE SOURCE CODE
110
IDENTIFYING OPERATIONS TO BE OBSCURED
115
DETERMINING THE EQUIVALENT SPLIT VARIABLE EXPRESSION FOR THE OPERATION USING SPLIT VARIABLES
120
REPLACING THE IDENTIFIED OPERATION WITH THE EQUIVALENT SPLIT VARIABLE OPERATION
125
STOP
130

FIG. 1

242
USER DEVICE
244
USER DEVICE
240
DATA NETWORK
200
220
202
PROCESSOR
204
MEMORY
206
USER INTERFACE
208
SYSTEM BUS
210
USER INTERFACE
212
CONTENT STORAGE
CONTENT SERVER
222
PROCESSOR
224
MEMORY
226
USER INTERFACE
228
SYSTEM BUS
230
NETWORK INTERFACE
232
APPLN. SERVER
CONTENT SERVER


FIG. 2

Europäisches
Patentamt
European
Patent Office
Office européen
des brevets

# EUROPEAN SEARCH REPORT

Application Number
EP 16 16 5630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/166191 A1 (KANDANCHATHA ARUN N [CA] ET AL) 28 July 2005 (2005-07-28) | 1-5,7-15 | INV. G06F21/14 G06F21/50 |
| A | * paragraph [0029] - paragraph [0071] * * figures 1,2 * | 6 | |
| X | US 6 594 761 B1 (CHOW STANLEY T [CA] ET AL) 15 July 2003 (2003-07-15) | 1,10,11 | |
| A | * column 5, line 65 - column 6, line 49 * * column 9, line 8 - line 45 * * column 13, line 32 - column 18, line 29 * | 2-9, 12-15 | |
| X | US 2010/054459 A1 (CIET MATHIEU [FR] ET AL) 4 March 2010 (2010-03-04) | 1,10,11 | |
| A | * paragraph [0029] - paragraph [0042] * | 2-9, 12-15 | |

TECHNICAL FIELDS SEARCHED (IPC)

G06F
H04L

The present search report has been drawn up for all claims

3

| Place of search | Date of completion of the search | Examiner |
|---|---|---|
| The Hague | 12 October 2016 | Cartrysse, Kathy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 16 5630

This annex lists the patent family members relating to the patent documents cited in the above-mentioned European search report. The members are as contained in the European Patent Office EDP file on
The European Patent Office is in no way liable for these particulars which are merely given for the purpose of information.

12-10-2016

| Patent document cited in search report | Publication date | Patent family member(s) | Publication date |
|---|---|---|---|
| US 2005166191 A1 | 28-07-2005 | NONE | |
| US 6594761 B1 | 15-07-2003 | AU 5379700 A | 02-01-2001 |
| | | CA 2376576 A1 | 21-12-2000 |
| | | EP 1190292 A1 | 27-03-2002 |
| | | US 6594761 B1 | 15-07-2003 |
| | | US 2003221121 A1 | 27-11-2003 |
| | | WO 0077597 A1 | 21-12-2000 |
| US 2010054459 A1 | 04-03-2010 | US 2010054459 A1 | 04-03-2010 |
| | | US 2011320806 A1 | 29-12-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7966499 B